# EUROPÄISCHE PATENTSCHRIFT

(11) **EP 3 946 890 B1**
(45) Veröffentlichungstag und Bekanntmachung des Hinweises auf die Patenterteilung: **07.06.2023**
(21) Anmeldenummer: 20715338.8
(22) Anmeldetag: 27.03.2020
(51) Int. Cl.: B29C 49/48, B29C 49/06, B29K 67/00, B29L 31/00, B29K 23/00

(54) **VERFAHREN ZUM ÜBERTRAGEN EINER NEGATIVSTRUKTUR EINER OBERFLÄCHE EINER INNENWANDUNG EINES BLASFORMWERKZEUGES UND KUNSTSTOFFBEHÄLTER**
METHOD FOR TRANSFERRING A NEGATIVE STRUCTURE OF A SURFACE OF AN INNER WALL OF A BLOW MOULDING TOOL, AND PLASTIC CONTAINER
PROCÉDÉ DE TRANSFERT D'UNE STRUCTURE NÉGATIVE D'UNE SURFACE D'UNE PAROI INTÉRIEURE D'UN MOULE DE SOUFFLAGE ET RÉCIPIENT EN PLASTIQUE

(30) Priorität: 29.03.2019 CH 4132019
(43) Veröffentlichungstag der Anmeldung: 09.02.2022
(73) Patentinhaber: ALPLA Werke Alwin Lehner GmbH & Co. KG, 6971 Hard (AT)
(72) Erfinder: KÜNZ, Johann, 6971 Hard Vorarlberg (AT); BOHLE, Thomas, 6861 Alberschwende Vorarlberg (AT)
(74) Vertreter: Bohest AG Branch Ostschweiz
(86) Internationale Anmeldenummer: PCT/EP2020/058666
(87) Internationale Veröffentlichungsnummer: WO 2020/201063

(56) Entgegenhaltungen:
- EP-A1- 2 703 146
- WO-A1-00/27612
- US-A1- 2010 252 963
- US-A1- 2018 079 128

## Beschreibung

Die Erfindung betrifft ein Verfahren zum Übertragen einer Negativstruktur einer Oberfläche einer Innenwandung eines Blasformwerkzeugs insbesondere eines Extrusionsblasformwerkzeuges auf eine Oberfläche eines Kunststoffbehälters sowie einen Kunststoffbehälter aus einem Polyolefin hergestellt nach einem solchen Verfahren.

Derartige Verfahren und Kunststoffbehältern sind in den Patentschriften US2018/079128A1 und US2010/252963A1 beschrieben.

Ein- oder mehrschichtige Kunststoffbehälter beispielsweise aus Polyolefinen werden oft in einem Extrusionsblasverfahren, insbesondere in einem Schlauchblasverfahren hergestellt. Dabei wird mit einem Extrusionskopf üblicherweise kontinuierlich ein Kunststoffschlauch extrudiert, der ein- oder mehrschichtig ausgebildet sein kann. Der Kunststoffschlauch wird abschnittsweise in eine Formkavität, auch bekannt als Formnest, eines Blasformwerkzeugs eingebracht, durch ein mit Überdruck eingebrachtes Blasmedium in die gewünschte Form gebracht, abgekühlt und entformt. Das Blasformwerkzeug besteht üblicherweise aus zwei Blasformhälften, in denen jeweils eine Hälfte der Formkavität ausgebildet ist. Die Blasformhälften werden periodisch geöffnet, geschlossen und wieder geöffnet, um einen Schlauchabschnitt in die Formkavität einzubringen und nach dem Aufblasen den fertigen Behälter wieder zu entformen.

Ein weiteres, sehr häufig eingesetztes Herstellverfahren für Kunststoffbehälter stellt das Streckblasen dar. Bei diesem Verfahren wird ein sogenannter Preform, der meist eine längliche, röhrchenartige Gestalt besitzt, an seinem einen Längsende einen Boden und am anderen Längsende einen Halsbereich mit ausgeformten Befestigungselementen für eine Verschlusskappe, beispielsweise Gewindeabschnitte, in eine Formkavität eines Blasformwerkzeugs eingesetzt und durch ein mit Überdruck eingebrachtes Blasmedium in die gewünschte Form gebracht. Dabei wird der Preform zusätzlich mit einem durch die Halsöffnung eingefahrenen Reckdorn in axiale Richtung gereckt. Nach dem Streck-/Blasvorgang wird der fertige Kunststoffbehälter abgekühlt und aus dem Blasformwerkzeug entformt.

Der ein- oder mehrschichtige Preform wird vor dem Streckblasprozess typischerweise in einem separaten Spritzgiessverfahren hergestellt. Es ist auch schon vorgeschlagen worden, Preforms in einem Kunststoffpressformverfahren oder durch einen Extrusionsblasprozess herzustellen. Als Rohstoff für die Herstellung von Kunststoffbehältern im Streckblasprozess kommen vor allem Polyethylenterephthalat (PET) und ähnliche Materialien, wie z.B. Polyethylenfuranoat (PEF) oder Polyolefine, wie z.B. Polypropylen (PP), High Density Polyethylen (HDPE) oder Low Density Polyethylen (LDPE) zum Einsatz. Im sogenannten Einstufen-Streckblasprozess wird der Preform unmittelbar nach seiner Herstellung in die Formkavität des Blasformwerkzeugs eingesetzt und zu einem Kunststoffbehälter aufgeblasen und gereckt. Vielfach werden die Kunststoffbehälter jedoch in einem zweistufigen Verfahren hergestellt. Dabei werden in einem ersten Schritt die Preforms hergestellt und für die spätere Verwendung zwischengelagert. Beim späteren Streckblasprozess werden die Preforms zunächst wieder erwärmt, in die Formkavität eines Blasformwerkzeugs eingebracht, mit einem Reckdorn in Längsrichtung gestreckt und üblicherweise durch Überdruck zu einem Kunststoffbehälter gemäss der Formkavität aufgeblasen. Auf diese Weise können beide Prozesse, das Spritzgiessen und das Streckblasen, separat und optimal betrieben werden.

Auch beim Streckblasprozess wird üblicherweise ein Blasformwerkzeug eingesetzt, das aus zwei Blasformhälften besteht, in denen jeweils ein Teil der Formkavität ausgebildet ist. Die Blasformhälften werden periodisch geöffnet, geschlossen und wieder geöffnet, um den Preform einzusetzen, aufzublasen und zu recken und den fertigen Kunststoffbehälter zu entformen.

Der extrudierte Schlauch und auch der Preform werden in ihren jeweiligen Verfahren einheitlich als Vorformling bezeichnet.

Damit der Vorformling beim Einsetzen in die Formkavität des Blasformwerkzeugs keinen Temperaturschock erleidet, der zu einem bereichsweisen Ausfrieren des Kunststoffmaterials führen und eine weitere optimale Verformung im Blasprozess behindern könnte, sollten die formgebenden Innenflächen, also insbesondere die Innenwandungen der Formnester, des Blasformwerkzeugs beim Einsetzen des Vorformlings, eine Temperatur aufweisen, die sich nicht wesentlich von der Temperatur des Schlauchs unterscheidet. Das heisst, die Temperatur der Innenflächen des Blasformwerkzeuges weichen im Zeitpunkt des Einsetzens des Vorformlings vorzugsweise nicht mehr als rund 10% von der Temperatur des Vorformlings ab. Polyolefine werden typischerweise bei einer Temperatur von 180° Celsius mit einer Abweichung von bis zu 20° K eingesetzt, Polyethylenterephthalat wird typischerweise bei Temperaturen von 240° Celsius bis 280° Celsius mit einer Abweichung von bis zu 20° K eingesetzt. Andererseits muss das Blasformwerkzeug am Ende des Blasprozesses, vor dem Entformen des hergestellten Kunststoffbehälters soweit herunter gekühlt sein, dass der Polymerisierungsvorgang des Kunststoffmaterials weitgehend abgeschlossen ist und es beim weiteren Behandeln des Kunststoffbehälters zu keinen unterwünschten Verformungen mehr kommen kann.

Polyolefine werden typischerweise bei ca. 60° Celsius entformt wobei die Temperatur am Hals noch bei ca. 80° Celsius liegt und Polyethylenterephtalat bei ca. 30° Celsius, wobei der Hals- und Bodenbereich eine höhere Temperatur von rund 60° Celsius aufweisen kann. Damit entsteht eine entsprechend hohe Temperaturdifferenz während des Blasformvorgangs.

Blasformwerkzeuge sind üblicherweise mehrteilig aufgebaut und bestehen meist aus Aluminium oder Stahl oder auch aus Buntmetallen. Die beiden Blasformhälften eines Blasformwerkzeugs weisen jeweils einen Formkörper auf, in dem wenigstens ein Formnest ausgebildet ist. Der Formkörper ist auf einer Grundplatte aus Stahl montiert, die Bestandteil der Schliesseinheit der Blasformmaschine ist. Wegen der beim Blasformprozess auftretenden Drücke müssen die Grundplatten und die Formkörper relativ massiv ausgebildet sein. Aus dem Spritzgiessverfahren sind Formwerkzeuge bekannt, die sehr ähnlich aufgebaut sind, jedoch eine deutlich massivere Ausgestaltung aufweisen, um den beim Spritzgiessen auftretenden Drücken, die um ein Vielfaches höher sind als bei Blasformverfahren, standzuhalten.

Berücksichtigt man die relativ guten Wärmeleiteigenschaften der einzelnen Komponenten bei Blasformwerkzeugen, ist unmittelbar einsichtig, dass ein sehr grosser Aufwand für das periodische Aufheizen und Abkühlen der Blasformwerkzeuge getrieben werden muss, um einigermassen akzeptable Zykluszeiten zu erreichen und gleichzeitig qualitativ hochwertige Produkte herstellen zu können. Es ist bekannt, dass das Erwärmen bzw. Abkühlen des Blasformwerkzeugs mittels eines geeigneten Fluids, beispielsweise Wassers, das in Kanälen, Fräsungen und Bohrungen des Blasformwerkzeugs unter Druck zirkuliert wird, erfolgen kann. Zur Erzielung möglichst kurzer Zykluszeiten wird das Heiz-/Kühlfluid mit relativ hohem Druck durch die Kanäle, Fräsungen und Bohrungen geleitet. Damit das Blasformwerkzeug diesen hohen Drücken standhält, muss es umso massiver ausgebildet werden. In Verbindung mit den guten Wärmeleiteigenschaften der für das Blasformwerkzeug verwendeten Materialien ergibt sich daraus jedoch ein noch höherer Aufwand für das periodische Aufheizen und Abkühlen des Blasformwerkzeugs. Ausserdem erhöht sich durch die massivere Ausbildung des Blasformwerkzeugs auch der für das periodische Öffnen und Schliessen der Blasformhälften erforderliche Aufwand.

Aufgrund der mangelnden Wirtschaftlichkeit wurde bis anhin darauf verzichtet, die Formen auf die vorliegend beschriebenen bevorzugten Temperaturen aufzuheizen. Der Aufwand, um die eingetragene Wärme wieder auszubringen ist enorm und bedingt eine sehr hohe Kühlleistung. Zudem verlängert dies die Zykluszeit, da bis zum Entformen gewartet werden muss, bis die gesamte Temperaturdifferenz abgebaut ist. Dabei wurde in Kauf genommen, dass die fertigen Oberflächen der produzierten Behälter aufgrund der zu grossen Temperaturdifferenz Mängel aufweisen können und/oder eine Negativstruktur, die auf der Oberfläche der Innenwandung des Formnestes aufgebracht ist, lediglich mit einer relativ hohen Abweichung auf die Kunststoffbehälter übertragen werden und dabei insbesondere auf das Übertragen von Strukturen kleiner als 500 um verzichtet wurde. Vielfach werden derartige Behälter mit einer aufgeschrumpften Umverpackung versehen, sodass diese Mängel verdeckt bleiben.

Es ist daher eine Aufgabe der Erfindung zumindest einen oder mehrere Nachteile des Standes der Technik zu beheben. Insbesondere soll ein Verfahren bereitgestellt werden mit dem es ermöglicht ist, Negativstrukturen einer Oberfläche einer Innenwandung eines Blasformwerkzeuges mit einer sehr geringen Abweichung und entsprechend einer hohen Formtreue auf den Kunststoffbehälter zu übertragen.

Diese Aufgabe wird durch die in den unabhängigen Patentansprüchen definierten Verfahren und Vorrichtungen gelöst. Weitere Ausführungsformen ergeben sich aus den abhängigen Patentansprüchen.

Ein erfindungsgemässes Verfahren zum Übertragen einer Negativstruktur einer Oberfläche einer Innenwandung eines Blasformwerkzeugs, insbesondere eines Extrusionsblasformwerkzeugs, auf eine Oberfläche eines Kunststoffbehälters umfasst die Schritte:
- Aufheizen zumindest eines Bereichs eines Formnests eines Formkörpers des Blasformwerkzeuges an welchem die Negativstruktur ausgebildet ist,
- Einbringen eines Vorformlings in das Formnest,
- Schliessen des Blasformwerkzeugs
- Formen des Kunststoffbehälters durch Aufblasen des Vorformlings und durch Anlegen des Vorformlings an die Innenwandung des Formnestes
- Abkühlen des Bereichs durch Zuführung eines Kühlmediums durch Temperierkanäle
- Entformen des Kunststoffbehälters.

Der Bereich wird vorzugsweise durch Zuführen eines Heizmediums in die Temperierkanäle aufgeheizt.

Das Heizmedium und das Kühlmedium können identisch sein jedoch weisen sie entsprechend ihres Zweckes unterschiedliche Temperaturen auf. Entsprechend wird allgemein von einem Temperiermedium gesprochen.

Das vorliegende Verfahren ermöglicht das gezielte Temperieren eines Bereichs des aufgeblasenen Kunststoffbehälters, der im Wesentlichen dem aufgeheizten Bereich des Formnestes entspricht, wobei in diesem Bereich ein spezifisches Temperaturprofil gefahren werden kann.

Durch das Aufheizen wird erreicht, dass der in das Formnest eingebrachte Vorformling beim Formen des Kunststoffbehälters durch das Aufblasen des Vorformlings gut in die vorhandenen Negativstrukturen einer Oberfläche einer Innenwandung des Blasformwerkzeugs fliesst und/oder sich an die entsprechende Oberfläche und damit an die entsprechende Struktur anschmiegt.

Das nachfolgende Abkühlen begünstigt eine schnelle und damit passgenaue Erstarrung des Kunststoffbehälters und damit eine entsprechend gute Abbildung der Negativstruktur an dem Kunststoffbehälter.

Das Aufheizen und nachfolgende Abkühlen auf die gewünschten Temperaturen ermöglicht das passgenaue Übertragen von Strukturen aus dem Formnest auf die Oberfläche des aufgeblasenen Kunststoffbehälters. Dabei kann es sich bei den Strukturen sowohl um strukturierte Oberflächen handeln als auch um polierte Oberflächen. Mit anderen Worten ermöglicht das vorliegende Verfahren das Übertragen einer Struktur von dem Formnest auf die Oberfläche des Behälters mit einer Abweichung von weniger als 15 %, vorzugsweise weniger als 10 %, besonders bevorzugt weniger als 5 % gegenüber der Negativstruktur.

Polierte Oberflächen sind Oberflächen, die beispielsweise mittels Polituren bearbeitet wurden und eine geringe Menge von Material abgetragen wurde, um eine entsprechende Oberfläche durch Abtragen von Rauheitsspitzen zu glätten und an dieser Oberfläche gegebenenfalls Glanz zu erzeugen. Von polierten Oberflächen wird typischerweise ab Mittenrauwerten von 0.8 um gesprochen.

Der Glanz von Oberflächen wird mittels Reflektometern in sogenannten "gloss units" (GU) ausgedrückt. Vorliegend wird von Glanz gesprochen, wenn der Glanz 10 GU's überschreitet. Die Messung wird nach ISO 2813 durchgeführt. Für ganz oder teilweise transparente Objekte wird kein Reflektometer verwendet, sondern der Reflexionsgrad also der Quotient aus reflektiertem zu eingestrahltem Licht, für einen bestimmten Winkel angegeben. Bei ganz oder teilweise transparenten Kunststoffen wird von Glanz gesprochen, wenn der Reflexionsgrad 20% übersteigt.

Durch das erfindungsgemässe Verfahren können sogar mit Kunststoffen, wie z.B. Polyolefinen, bei denen es bekanntermassen sonst ohne zusätzliche Arbeitsschritte, wie beispielsweise einem mehrschichtigen Aufbau des Behälters beziehungsweise des Vorformlings, bei dem die äusserste Schicht, die einen Glanz hervorrufen soll, niedrigviskos ist und zum Erreichen der geringen Viskosität unterschiedliche Zuschlagstoffe enthält, nicht möglich ist, solche glänzenden Oberflächen erzielt werden. Bei entsprechender Ausgestaltung der Oberflächen des Bereichs können auch Kunststoffbehälter mit zumindest in Teilbereichen strukturierten Oberflächen hergestellt werden. Somit sind bei entsprechender Gestaltung der Oberflächen der Innenwandung des Blasformwerkzeuges sogar Behälter herstellbar, die Oberflächen aufweisen, welche in Teilbereichen des Bereichs glänzend und in anderen Teilbereichen des Bereichs strukturiert ausgebildet sind.

Strukturiert heisst vorliegend, dass die Oberfläche des Behälters im Wesentlichen dem Negativ des Formkörpers entspricht, wobei die Abweichung zwischen dem Negativ und der späteren Oberfläche 15%, vorzugsweise w 10 %, besonders bevorzugt 5 % nicht überschreitet.

Es versteht sich von selbst, dass bei Bezug auf das Formnest in einer Blasformhälfte lediglich der Teil des Formnestes gemeint ist, der sich auch in der jeweiligen Blasformhälfte befindet. Erst durch das Zusammenfügen der Blasformhälften (oder Teile, wenn das Blasformwerkzeug mehr als zweiteilig ist) ist das ganze Formnest zur Verfügung gestellt. Das Formnest entspricht im Wesentlichen dem Negativ des späteren Kunststoffbehälters.

Wird Bezug auf die Innenwandung des Blasformwerkzeuges genommen, so handelt es sich um die Innenwandung des Formnestes.

Es kann vorgesehen sein, dass der Bereich das vollständige Formnest umfasst.

Dies ermöglicht das Ausbilden einer gewünschten Oberfläche auf dem ganzen Behälterkörper des Kunststoffbehälters.

Es kann vorgesehen sein, dass der Bereich beim Formen von Kunststoffbehältern die im Wesentlichen aus Polyolefinen bestehen auf mindestens 100 °C, vorzugsweise auf mindestens 130 °C insbesondere auf mindestens 150 °C und vorzugsweise auf 170 °C aufgeheizt wird.

Je höher die Temperatur ist auf die der Bereich aufgeheizt wird, desto besser fliesst der Vorformling beim Aufblasen in die entsprechenden Negativstrukturen der Oberfläche der Innenwandung des Formnestes. Entsprechend erhöht sich die Formtreue zwischen der Negativstruktur und dem Kunststoffbehälter. Die Abbildbarkeit der Negativstruktur wird also erhöht.

Bei einer Temperatur von 100 °C wird bereits eine relativ gute Formtreue erreicht ohne dabei die Zykluszeit wesentlich verlängern zu müssen. Je höher die Temperatur gewählt wird, desto wahrscheinlicher ist es, dass mehr Zeit zum Aufheizen und zum Abkühlen benötigt wird.

Der Bereich kann beim Abkühlen mit einer mittleren Abkühlungsgeschwindigkeit von mindestens 5 K/s vorzugsweise von 15 K/s insbesondere von 30K/s gekühlt werden, bis eine Entformtemperatur von 60 °C bei Kunststoffbehältern, die im Wesentlichen aus Polyolefinen bestehen, erreicht wird.

Dies begünstigt eine schnelle und damit passgenaue Erstarrung des Kunststoffbehälters in Bereichen die mit dem Bereich der Innenwandung des Formnestes in Kontakt sind.

Der Vorformling kann im Wesentlichen aus einem Polyolefin bestehen wobei das Heizmedium mit einer Temperatur von 120 °C bis 200° C, vorzugsweise 160° C, und das Kühlmedium mit einer Temperatur von 5° C bis 40° C, vorzugsweise 15° C, zugeführt wird.

Es hat sich gezeigt, dass diese Prozessparameter insbesondere auf das Bereitstellen des entsprechenden Temperiermediums einen positiven Einfluss haben, da diese Temperaturen relativ kostengünstig erreicht werden können.

Es kann vorgesehen sein, dass der Bereich gegenüber dem Formkörper und/oder gegenüber einer Grundplatte thermisch isoliert ist.

Die aufzuheizende bzw. abzukühlende Masse des Bereichs ist somit von weiteren Elementen wie Grundplatte und/oder Formkörper zumindest teilweise thermisch entkoppelt. Diese reduziert den Wärmeübergang zwischen den einzelnen Elementen und reduziert damit die Masse die abzukühlen, bzw. aufzuheizen ist. Diese reduziert einerseits den Energieaufwand und andererseits ermöglicht es, bei gleichem Energieaufwand den Bereich schneller abzukühlen bzw. aufzuheizen. Bei gleicher Zykluszeit kann somit eine weitaus höhere Temperaturdifferenz zwischen der Entformtemperatur und der Aufblastemperatur erreicht werden. Mit anderen Worten, der Bereich kann höher aufgeheizt werden ohne Einbusse in Bezug auf die Zykluszeiten.

Mit anderen Worten, wenn der Bereich das ganze Formnest umfasst ist im Wesentlichen der gesamte Formkörper zur Grundplatte, auf der der Formkörper angeordnet ist, thermisch isoliert, insbesondere mit einem Isolationsblock.

Ist der Bereich jedoch lediglich als ein Teilbereich der Innenwandung des Formnestes ausgebildet, so kann vorgesehen sein, dass lediglich dieser Bereich zumindest teilweise mit einem Isolationselement gegenüber dem restlichen Formkörper und allenfalls zusätzlich gegenüber der Grundplatte thermisch isoliert ist. Auch diese Ausgestaltung ermöglicht bei gleicher Zykluszeit höhere Temperaturdifferenzen zwischen der Entformtemperatur und der Aufblastemperatur. Mit anderen Worten, der Bereich kann höher aufgeheizt werden ohne Einbusse in Bezug auf die Zykluszeiten.

Der Bereich kann einen zugehörigen Abschnitt im Formkörper aufweisen wobei der Bereich in seinem zugehörigen Abschnitt des Formkörpers separate Temperierkanäle zum Temperieren des Bereichs aufweist.

Unter einem zugehörigen Abschnitt wird definitionsgemäss ein zur Innenwandung abgewandter Teilbereich des Formkörpers verstanden, der im Formkörper hinter dem Bereich angeordnet ist.

Das Vorsehen von separaten Temperierkanälen ermöglicht das gezielte Temperieren, also das Aufwärmen oder Abkühlen, des Bereiches der Innenwandung.

Ist der Bereich als ein Teilbereich der Innenwandung ausgebildet, ermöglicht dies einerseits diesen Bereich unabhängig von dem restlichen Formkörper zu Temperieren. Andererseits ist durch die Ausbildung des Bereichs als ein separat temperierter Teilbereich dieser im Verhältnis zum Formnest kleiner und weist somit eine geringere Masse auf. Dies ermöglicht das sehr schnelle Aufheizen oder das sehr schnelle Abkühlen dieses Bereichs.

Es versteht sich von selbst, dass auch mehrere Bereiche möglich sind die jeweils alle in ihrem zugehörigen Abschnitt des Formkörpers separate Temperierkanäle aufweisen.

Dies ermöglicht das unabhängige Temperieren von mehreren Teilbereichen eines Formnestes. Dabei kann ein entsprechendes Temperaturprofil eines ersten Bereichs sowohl zeitlich als auch bezüglich der Temperatur unterschiedlich zum Temperaturprofil eines zweiten Teilbereichs gefahren werden.

Alternativ ist es auch möglich, mehrere Bereiche vorzusehen, die jeweils in ihrem zugehörigen Abschnitt des Formkörpers separate Temperierkanäle aufweisen, wobei jedoch diese einen oder mehrere Bereiche einen gemeinsamen, jedoch vom restlichen Formkörper unabhängigen, Temperierkreislauf aufweisen.

Dies stellt sicher, dass die mehreren Bereiche ein gemeinsames Temperaturprofil aufweisen.

Falls der Bereich das vollständige Formnest umfasst und entsprechend mit einem Isolationselement zum Grundkörper thermisch isoliert ist, so ermöglicht das separate Ausbilden von Temperierkanälen ebenfalls das schnelle Aufheizen und Abkühlen, da das Formnest, beziehungsweise der Formkörper, im Wesentlichen als Schale ausgebildet sein kann.

Wie bereits dargelegt ist die aufzuheizende bzw. wieder abzukühlende Masse deutlich reduziert und ist das Aufheizen bzw. Abkühlen im Wesentlichen nur noch auf den Bereich und seinen zugehörigen Abschnitt selbst reduziert. Dadurch ist ein sehr viel geringerer Energieaufwand für das Aufheizen bzw. das Abkühlen des Bereichs nötig. Wegen der geringeren Masse können das Aufheizen und das Abkühlen des Formkörpers in einer relativ kurzen Zeit bewerkstelligt werden und/oder bei gleichbleibender Zykluszeit eine höhere Temperaturdifferenz erreicht werden. Insbesondere ist ein Aufheizen oder Abkühlen mit einer Geschwindigkeit von 5 K/s, insbesondere 15K/S, besonders bevorzug 30K/s oder mehr ermöglicht.

Es ist darauf hingewiesen, dass bei Bezug auf das ganze Formnest jeweils der Teil des Formnestes gemeint ist, welcher einem Einzelteil des Blasformwerkzeugs, beispielsweise einer Blasformhälfte, zugeordnet ist.

Nachfolgend wird auf die Ausführung Bezug genommen, in der zwischen dem Formkörper und der Grundplatte der Blasformhälfte ein Isolationselement, beispielsweise ein Isolationsblock, aus einem thermisch isolierenden Material angeordnet ist.

Die Gesamtmasse des Blasformwerkzeugs kann auf das für die Aufnahme der beim Herstellprozess des Kunststoffbehälters auftretenden Kräfte unbedingt Nötige beschränkt werden. Sie setzt sich typischerweise für jede Blasformhälfte im Wesentlichen aus der Grundplatte, dem Isolationsblock und dem Formkörper zusammen. Die Verringerung der Gesamtmasse des Blasformwerkzeugs wirkt sich auch vorteilhaft auf die Energiekosten für die Bewegung der Blasformhälften zum Öffnen und Schliessen derselben aus.

Es kann vorgesehen sein, dass der Formkörper in den Isolationsblock eingebettet ist. Dadurch ist der Formkörper über einen wesentlichen Abschnitt der Erstreckung des wenigstens einen Formnests thermisch isoliert. Durch das Einbetten des Formkörpers ist die Bildung von Wärmebrücken verhindert oder zumindest verringert. Die Abmessungen des Formkörpers und des Isolationsblocks können dabei derart gewählt sein, dass beim Einsatz einer Kopfplatte bzw. eines Fussteils für die Erstellung des Behälterhalses bzw. des Behälterbodens, auch diese gegenüber den Grundplatten der Blasformhälften thermisch isoliert sind und allfällige Wärmebrücken verhindert werden.

Es kann vorgesehen sein, dass der Isolationsblock in einen Formblock eingebettet ist. Der Formblock besteht aus der Grundplatte, einem Boden, zwei seitlich angeordneten Rahmenteilen und einem Halseinsatz. Die Rahmenteile sind mit Führungen ausgestattet.

Eine derartige Ausbildung führt zur Reduktion von Einzelteilen. Die Herstellung des Blasformwerkzeuges wird vereinfacht.

Es kann alternativ vorgesehen sein, dass der Formblock und der Isolationsblock einteilig ausgebildet sind.

Mit anderen Worten, jede Formwerkzeughälfte ist lediglich zweiteilig ausgebildet und besteht aus einem Isolationsblock, der sämtliche Funktionen der Grundplatte und des Rahmens wie Halten und Führen übernimmt und einem Formkörper. Die Fertigung des Blasformwerkzeugs ist damit vereinfacht.

Vorzugsweise weist der Formkörper einer jeden Blasformhälfte eine, insbesondere in den Isolationsblock eingebettete, Rückseite auf, die mit, insbesondere einseitig offenen, Kanälen für den Durchfluss eines Heiz-/Kühlmediums versehen ist. Das Heiz-/Kühlmedium strömt dabei in möglichst grosser Nähe zur das Formnest begrenzenden formgebenden Innenwandung. Dadurch kann insbesondere beim Abkühlen des Formkörpers die Wärme der an die formgebende Innenwandung anliegenden Behälterwandung sehr gut abgeführt werden. Anders als beispielsweise beim Spritzgiessen kann beim Blasformen die Wärme nur einseitig über die gekühlte formgebende Innenwandung des Formkörpers abgeführt werden. Es empfiehlt sich daher, den Abstand des Heiz-/Kühlmediums von der formgebenden Innenwandung möglichst gering zu halten.

Die Kanäle können durch das Einbetten des Formkörpers im Isolationsblock geschlossen werden, sodass ein Kühlkreislauf entsteht. Vor dem Einbetten sind diese Kanäle also einseitig offen und zugänglich.

Die Ausbildung von derartigen Kanälen am Formkörper ermöglicht es, die Kanäle beispielsweise in der Form frei auszubilden, wobei insbesondere geschwungene Formen ermöglicht sind oder Strömungsquerschnitte, die von einer runden Form abweichen. Derartige Ausbildungen sind beispielsweise in konventionellen Formkörpern nicht möglich, da in Kühlbohrungen keine Richtungswechsel möglich sind.

Vorzugsweise weist die Rückseite des Formkörpers Rippen auf, zwischen denen, insbesondere durch die, die Kanäle gebildet sind. Die Rippen sind vorzugsweise abwechselnd angeordnet und erstrecken sich von einer ersten Längsseite der Form, an welcher die Trennebene gebildet ist, in Richtung einer zweiten Längsseite der Form, jedoch nur soweit, dass zwischen der Rippe und der jeweiligen zweiten Längsseite eine Öffnung gebildet wird, die einen, dem Querschnitt der Kanäle entsprechenden, Querschnitt aufweist. Es bildet sich so ein zusammenhängender mäanderförmiger Kanal der sich über die Rückwand des Formkörpers erstreckt.

Die Rippen weisen eine Mindestwandstärke von 3 mm auf und überschreiten eine Wandstärke von vorzugsweise 8 mm nicht.

Beim Einbringen des Heiz-/Kühlmediums kann durch diese Rippen die Wärme sehr schnell der Formhälfte zugeführt oder aus dieser abgeführt werden.

Vorzugsweise ist durch die Anordnung des Formkörpers an oder auf dem Isolationsblock ein geschlossener Kühl- oder Heizkreislauf gebildet, der gegenüber seiner Umgebung abgedichtet ist und lediglich Vorrichtungen zur Zufuhr und zur Abfuhr des Heiz-/Kühlmediums aufweist.

Die Heiz-/Kühlkanäle, insbesondere der Heiz-/Kühlkreislauf, sind vorzugsweise also einerseits durch den Isolationsblock begrenzt und andererseits durch den Formkörper.

Dabei kann zudem vorgesehen sein, dass im Isolationsblock entsprechend korrespondierende Rippen und/oder Kanäle angeordnet sind, sodass die Rippen und Kanäle des Formkörpers jeweils auf den Rippen und Kanälen des Isolationsblocks angeordnet sind und gemeinsam eine Heiz-/Kühlquerschnitt bilden.

Die Heiz-/Kühlquerschnitte können in ihrem Querschnitt einfach angepasst werden. Bei gegebenem Querschnitt ist es zudem ermöglicht, die jeweiligen Rippen auf dem Formkörper und auf dem Isolationsblock jeweils mit der halben Höhe zu fertigen. Dies erleichtert die Fertigung.

Zweckmässigerweise dient der Isolationsblock nicht nur zur thermischen Isolation des Formkörpers gegenüber der Grundplatte. Der Isolationsblock kann mit Kanälen und/oder Bohrungen für die Zu- und Abfuhr eines Heiz-/Kühlmediums zu den an der Rückseite des Formkörpers ausgebildeten Kanälen ausgestattet sein. Es kann vorgesehen sein, dass alle Anschlüsse für die Zu- und Abfuhr von heissen und kalten Medien am Isolationsblock vorgesehen sind. Die Anschlüsse haben dann keinen thermischen Kontakt beispielsweise mit der Grundplatte oder anderen Bestandteilen des Werkzeugs.

Nachfolgend wird auf die Ausführung Bezug genommen, in welcher der Bereich als ein Teilbereich der Innenwandung ausgebildet ist, insbesondere die Ausführung, bei der der Bereich mit seinem zugehörigen Abschnitt an einem zum Formkörper gesondert ausgebildeten Formteil ausgebildet ist.

Dies ermöglicht einerseits die separate Fertigung des zugehörigen Abschnitts und der darin enthaltenen Temperierkanäle, andererseits ist durch die separate Ausbildung eine von der Oberfläche der restlichen Innenwandung unterschiedlich gestaltete Ausbildung der Oberfläche des Bereichs ermöglicht oder vereinfacht.

Ausserdem ist die Wartung des Blasformwerkzeugs erleichtert. Es ist zu erwarten, dass durch schnelle Wechsel von Temperaturprofilen der Bereich und der dazugehörige Abschnitt des Formwerkzeugs mehr belastet wird als das restliche Blasformwerkzeug und entsprechend dieser Bereich mit seinem zugehörigen Abschnitt früher Verschleiss zeigt. Durch die separate Ausbildung ist es ermöglicht, diesen verschlissenen Bereich durch Austausch des Formteils auszutauschen und das Blasformwerkzeug instand zustellen.

Das Formteil kann aus Aluminium oder einer Legierung davon ausgebildet sein. Aluminium hat einen kleineren Wärmeausdehnungskoeffizienten im Vergleich zu Stahl. Dies führt dazu, dass ein, in einem Formkörper aus Stahl angeordneten, Formteil aus Aluminium Spannungen, hervorgerufen durch Wärmeausdehnung, im Vergleich zu einer Kombination Stahl-Stahl verringert werden.

Ist ein Isolationselement vorgesehen, kann dieses zwischen dem Formteil und dem Formkörper angeordnet sein. Je nach Ausgestaltung des Formteils wird auch von einem Isolationsblock gesprochen.

Die aufzuheizende bzw. abzukühlende Masse des Bereichs und seines zugehörigen Abschnitts ist somit vom restlichen Formkörper zumindest teilweise thermisch entkoppelt. Diese reduziert den Wärmeübergang vom Formteil auf den Formkörper und reduziert damit die Masse die abzukühlen, bzw. aufzuheizen ist. Diese reduziert einerseits den Energieaufwand und andererseits ermöglicht es, bei gleichem Energieaufwand den Bereich schneller abzukühlen bzw. aufzuheizen.

Zur Versorgung der Temperierkanäle kann zwischen der Grundplatte und dem Formkörper ein Verteilerblock angeordnet sein.

Ein Verteilerblock ermöglicht das gezielte Zuführen eines Temperiermediums, also eines Heiz- oder Kühlmediums, zu den Temperierkanälen. Ebenfalls kann durch einen Verteilerblock ein Austauschelement geschaffen werden, welches es ermöglicht, durch einfachen Austausch des Verteilerblocks mehrere Temperierkanäle miteinander, also gemeinsam, zu beaufschlagen oder aber alternativ auch einen oder mehrere Bereiche separat mit einem Temperiermedium zu beaufschlagen.

Der Verteilerblock kann Anschlüsse für die Zu- und Abfuhr eines Heiz-/Kühlmediums, also eines Temperiermediums, zu den Temperierkanälen aufweisen.

Durch die Anordnung der Anschlüsse am Verteilerblock können diese einfach gewartet werden. Die Herstellung ist ebenfalls vereinfacht da ein Verteilerblock typischerweise eine Erstreckung bis an die Aussenbereiche des Blasformwerkzeugs aufweist und die Anschlüsse entsprechend einfach zugänglich sind.

Dabei kann vorgesehen sein, dass am Verteilerblock mehrere Anschlüsse zur Versorgung von mehreren Temperierkanälen angeordnet sind und diese jeweils separat ausgebildet sind. Dies ermöglicht das separate Beaufschlagen von unterschiedlichen Temperierkanälen. Durch den Austausch des Verteilerblocks ist es möglich, schnell und unkompliziert einen Verteilerblock einzufügen der lediglich einen einzelnen Satz Anschlüsse aufweist und der sämtliche vorhandenen Temperierkanäle miteinander verbindet, sodass diese gleichzeitig beaufschlagt werden können.

Die Temperierkanäle können als eine Bohrung ausgebildet sein. Dabei ist vorzugsweise innerhalb der Bohrung ein konzentrisch angeordnetes Rohr angeordnet sodass sich zwischen dem Rohr und der Bohrung als Temperierkanal ein Ringsspalt ausbildet.

Durch den Ringsspalt kann also beispielsweise das Temperiermedium in den zugehörigen Abschnitt des Bereichs eingebracht werden und durch das Rohr wieder ausgebracht werden, respektive durch das Rohr eingebracht und durch den Ringsspalt wieder ausgebracht werden. Die Fertigung der Temperierkanäle in dieser Art ist einfach, kostengünstig und schnell. Beim Versagen eines Rohres kann dieses einfach ausgetauscht werden.

Die Nachfolgenden Ausführungen beziehen sich auf sämtliche Ausführungsformen.

Es kann vorgesehen sein, dass das Isolationselement aus einem duroplastischen, hochtemperaturbeständigen Kunststoff mit geringer Wärmeleitfähigkeit bestehen.

Dies ermöglicht eine hohe Standdauer und verhindert ungewollte Wärmeströme.

Diese Kunststoffe zeichnen sich durch ihre sehr geringe Wärmeleitfähigkeit aus, die je nach Art des Kunststoffs nur 0,1 - 0,8 W/mK beträgt. Für den Einsatz in Verbindung mit Blasformwerkzeugen gemäss der Erfindung sind insbesondere Kunststoffe aus der Gruppe bestehend aus Polyaryletherketonen, wie z.B. Polyetheretherketon (PEEK), Polyamiden, glasfaserverstärkten Kunststoffen und verstärkten Duroplasten mit einer Temperaturbeständigkeit bis mindestens 200°C bevorzugt. Es kann sich dabei insbesondere um einen harten Kunststoff oder ein hartes Kunststoffverbundmaterial handeln. Als harte Kunststoffe werden vorliegend Kunststoffe berücksichtigt, die eine Härte von mindestens 75 Shore aufweisen.

Dies ermöglicht das passgenaue Fertigen und verhindert zudem, dass während des Betriebes durch hohe Drücke hervorgerufene Deformationen entstehen.

Der Formkörper kann mehrteilig ausgebildet sein und einen Halseinsatz und/oder einen Bodenteil aufweisen. Entsprechend kann der Formkörper einen Mittelteil aufweisen.

Dies erleichtert die Fertigung und ebenfalls die Wartung des Blasformwerkzeugs. So ist es beispielsweise möglich, den gesamten Halseinsatz und/oder den Bodenteil und/oder den Mittelteil als ein Bereich auszubilden der separate Temperierkanäle aufweist. Vorzugsweise ist jedoch zumindest in einem Bestandteil des Formkörpers, also beispielsweise im Halseinsatz und/oder ihm Bodenteil, vorzugsweise im Mittelteil, ein Bereich mit einem zugehörigen Abschnitt ausgebildet, der separate Temperierkanäle aufweist.

Die Grundplatte kann aus rostfreiem Stahl ausgebildet sein. Die Ausbildung aus Stahl stellt sicher dass die Grundplatte die auftretenden Kräfte aufnehmen kann. Die Eigenschaft dass der Stahl rostfrei ist verhindert eine frühzeitige Korrosion der Grundplatte.

Der Formkörper kann aus Aluminium oder einer Legierung davon ausgebildet sein.

Da Aluminium einen relativ geringen Wärmeausdehnungskoeffizienten aufweist ist eine hohe Formtreue des Blasformwerkzeugs über einen breiten Temperaturbereich ermöglicht.

Eine Wandstärke zwischen dem Temperierkanal und dem Bereich beträgt mindestens 1.5 mm und höchstens 12 mm. Der Bereich ist Teil der Oberfläche der Innenwandung, mit anderen Worten, eine Materialstärke zwischen der geblasenen Form und dem Temperiermedium beträgt 1.5 mm bis 12 mm.

Diese Dimensionierung garantiert einerseits eine Mindestfestigkeit hervorgerufen durch die Mindestwandstärke und andererseits einen Wärmeleitwiderstand der durch die maximale Abmessung dieser verbleibenden Wandstärke begrenzt ist. Entsprechend dynamisch kann der Bereich temperiert werden.

Der Bereich kann als Negativstruktur eine gleichmässig strukturierte Oberfläche aufweisen. Alternativ ist es ebenfalls vorstellbar, dass der Bereich als Negativstruktur eine glänzende Oberfläche aufweist. Zudem kann vorgesehen sein, dass der Bereich sowohl gleichmässige Strukturen als auch glänzende Teilbereiche aufweist.

Die strukturierte Oberfläche kann als ein Reflexionsgitter ausgebildet sein, das eine Gitterkonstante von weniger als 10 um aufweist. Diese strukturierte Oberfläche wird durch die vorgenannten Verfahrensschritte mit einer Abweichung von weniger als 1 um, insbesondere von weniger als 0.5 um, vorzugsweise von weniger als 0.1 um auf die Oberfläche des Kunststoffbehälters übertragen.

Dies ermöglicht das Bereitstellen eines entsprechenden Reflexionsgitters am fertig geblasen Kunststoffbehälter. Durch dieses Bereitstellen ist es möglich, auf den Kunststoffbehältern Hologramme anzubringen die es beispielsweise ermöglichen, Informationen zur Qualitätssicherung und/oder zur Rückverfolgung darin unterzubringen wobei diese Informationen beispielsweise durch optische Geräte ausgelesen werden können. Ausserdem kann eine für den Kunden ansprechende hochwertige Oberfläche geschaffen werden.

Ein weiterer Aspekt der Erfindung betrifft einen Kunststoffbehälter aus einem Polyolefin, insbesondere aus Polypropylen, der vorzugsweise nach einem wie vorliegend beschriebenen Verfahren hergestellt ist. Der Behälter weist eine Oberfläche auf, die zumindest in einem Bereich strukturiert ist. Die Struktur der Oberfläche weicht weniger als 1 um, insbesondere weniger als 0.5 um, vorzugsweise weniger als 0.1 um, bevorzugt weniger als 0.01 um von der Negativstruktur der dem Behälter entsprechenden Blasform ab.

Die entsprechende Abweichung wird wie folgt festgestellt:
Von der Struktur der Oberfläche des Behälters wird ein nach aussen versetztes Abbild erzeugt, das um die vorgegebene Abweichung nach aussen versetzt ist. Ebenfalls wird ein entsprechendes, nach innen versetztes Abbild der Struktur der Oberfläche erzeugt. Es ergibt sich damit um die Struktur der Oberfläche eine Hüllkurve deren Begrenzungen dem doppelten Abstand der vorab definierten Abweichung entspricht. Damit die Struktur der Oberfläche des Kunststoffbehälters die Kriterien in Bezug zur Abweichung erfüllt muss die Negativstruktur des Blasformwerkzeuges von dieser Hüllkurve umfasst sein. Es ist dabei zu beachten, dass beispielsweise fertig geblasene Behälter gesamthaft eine Schrumpfung aufweisen können. Mit anderen Worten, der fertig geblasene und abgekühlte Behälter weist unter Umständen in Bezug zum Formnest mit dem dieser Behälter produziert wurde eine Schrumpfung auf. Diese wird bei der Prüfung des vorgenannten Qualitätsparameters berücksichtigt, mit anderen Worten, der Behälter wird auf seine ursprüngliche Grösse skaliert.

Die strukturierte Oberfläche des Kunststoffbehälters kann als ein Reflexionsgitter ausgebildet sein wobei die Gitterkonstante vorzugsweise weniger als 10 um bevorzugt weniger als 5 um, insbesondere weniger als 1 um ist.

Dadurch weist der Kunststoffbehälter eine hochwertige und den Kunden ansprechende Oberfläche auf. Zudem ist es ermöglicht, innerhalb eines Reflexionsgitters unterschiedliche Informationen unterzubringen was es wiederum ermöglicht, das Produkt zurückzuverfolgen und/oder eine entsprechende Originalität zu beweisen.

Anhand von schematischen Figuren sind nachfolgend exemplarisch Ausführungsbeispiele eines Blasformwerkzeuges näher erläutert. Es zeigt:
- Figur 1:: ein Blasformwerkzeug aus dem Stand der Technik mit zwei Blasformhälften;
- Figur 2:: eine erste Blasformhälfte;
- Figur 3:: eine vertikale Schnittansicht der Figur 2;
- Figur 4:: eine zweite Blasformhälfte;
- Figur 5:: eine perspektivische Ansicht des Formkörpers der Blasformhälfte aus Figur 4; und
- Figur 6:: eine perspektivische Ansicht der Rückseite des Formkörpers aus Figur 5.

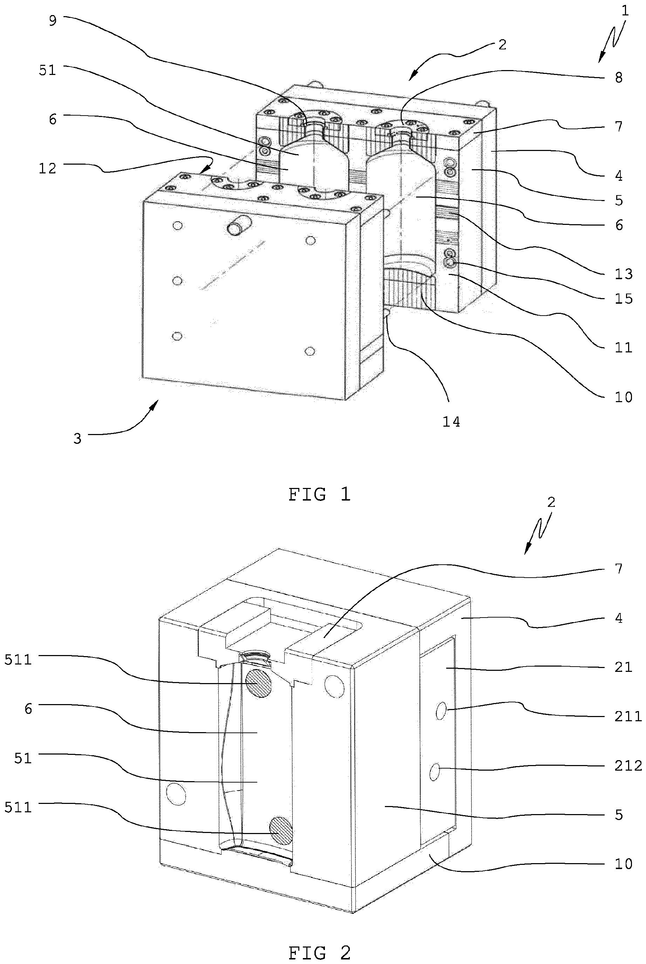

Die Figur 1 zeigt ein Blasformwerkzeug 1 aus dem Stand der Technik zur Erläuterung des prinzipiellen Aufbaus eines derartigen Werkzeugs. Das gesamthaft mit dem Bezugszeichen 1 versehene Blasformwerkzeug weist eine erste Blasformhälfte 2 und eine zweite Blasformhälfte 3 auf. Diese sind vorliegend relativ zueinander lateral verschiebbar, um das Blasformwerkzeug 1 periodisch zu öffnen und wieder zu schliessen. Jede Blasformhälfte 2, 3 umfasst eine Grundplatte 4, die einen Teil einer Schliesseinheit einer Blasformmaschine bildet. Auf der Grundplatte 4 ist ein Formkörper 5 montiert, in dem ein oder mehrere Formnester 6 ausgebildet sind. Gemäss dem dargestellten Ausführungsbeispiel weist der Formkörper 5 zwei Formnester 6 auf, die je eine Hälfte der Form eines Körpers eines Kunststoffbehälters festlegen. Das sich die Formnester entsprechen sind zur besseren Übersichtlichkeit nicht beide Formnester mit allen Bezugszeichen versehen obschon die Ausführungen jeweils für beide Formnester gelten.

Eine Kopfplatte 7 ist mit einer Kavität 8 zur Festlegung eines Halsabschnitts des Kunststoffbehälters ausgestattet. Im Fall eines Blasformwerkzeugs für eine Extrusionsblasformmaschine kann an der Kopfplatte 7 auch noch ein Halsmesser 9 für das Abtrennen eines in das Blasformwerkzeug 1 eingesetzten extrudierten Kunststoffschlauchs vorgesehen sein. Ein Bodenteil 10 schliesst die Formnester 6 am anderen Ende des Blasformwerkzeugs 1 ab. An den einander zugewandten Oberflächen 11, 12 der Blasformhälften 2, 3, welche eine Trennebene des Blasformwerkzeugs 1 festlegen, können Entlüftungsschlitze 13 ausgebildet sein. An einer der Blasformhälften 3 sind Führungsbolzen 14 ausgebildet, die beim Schliessen der Blasformhälften 2, 3 in Führungsbuchsen 15 der anderen Blasformhälfte 2 gleiten. Der Formkörper 5 weist eine Wandungsfläche, also eine Innenwandung 51 auf, die einen Teil des Formnestes 6 bildet.

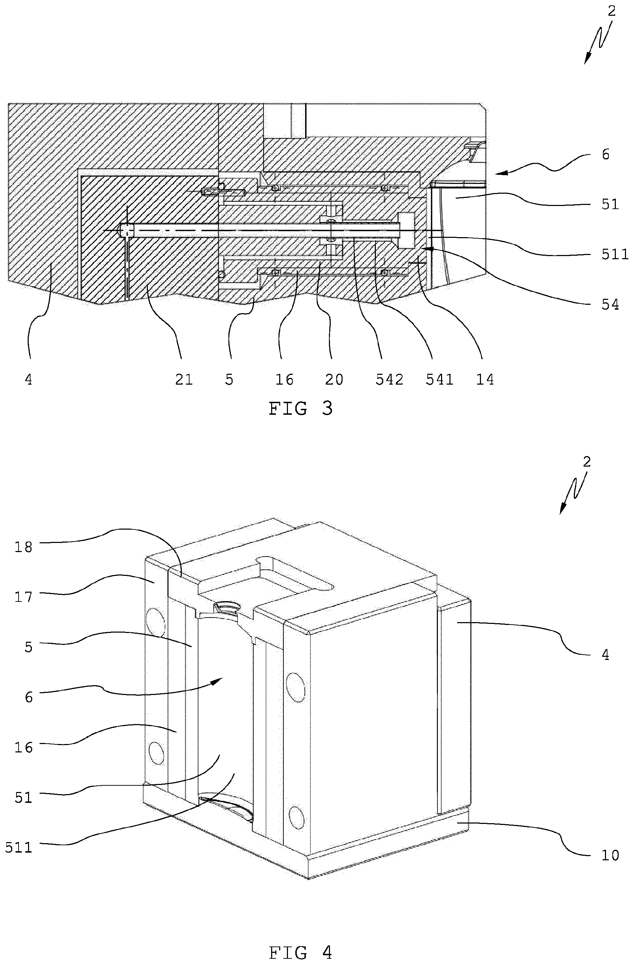

Die Figur 2 zeigt eine erste Blasformhälfte 2 eines Blasformwerkzeuges zur Ausführung erfindungsgemässen Verfahrens. Die Blasformhälfte 2 weist eine Grundplatte 4 auf. Auf der Grundplatte 4 angeordnet ist ein Verteilerblock 21 mit zwei Anschlüssen 211 und 212 zum Zuführen eines Temperiermediums. Auf dem Grundkörper 4 angeordnet ist ein Formkörper 5 sowie eine Bodenteil 10 welches an den Formkörper 5 anschliesst. Im Formkörper 5 eingelassen ist eine Kopfplatte 7. Die Gesamtheit aus Formkörper 5, Bodenteil 10 und Kopfplatte 7 stellt ein Formnest 6 bereit. Als Teil des Formnestes 6 weist der Formkörper 5 eine Innenwandung 51 auf. Die Innenwandung 51 weist zwei Bereiche 511 auf wobei jedem Bereich 511 ein zugehöriger Abschnitt mit separaten Temperierkanälen 54 (siehe dazu Figur 3) zugeordnet ist. Die Temperierkanäle 54 sind über den Verteilerblock 21 mit den Anschlüssen 211 und 212 verbunden. Die Oberflächen der Bereiche 511 weisen je ein Reflexionsgitter auf.

Die Figur 3 zeigt eine vertikale Schnittansicht durch einen der Bereiche 511 aus der Figur 2. Aus dieser Schnittansicht ist ersichtlich, dass der Bereich 511 als Teil der Innenwandung 51 ausgebildet ist. Das Reflexionsgitter ist der Übersichtlichkeit halber nicht näher dargestellt. Der Bereich 511 weist einen zugehörigen Abschnitt auf der als zum Formkörper 5 gesondert ausgebildetes Formteil 20 ausgebildet ist. Das Formteil 20 ist an seinem dem Formnest 6 zugewandten Ende in den Formkörper 5 eingebettet und nachfolgend, in Richtung der Grundplatte 4, mit einem Isolationselement 16 zu dem Formkörper 5 beabstandet. Zur besseren Isolation ist das Isolationselement 16 zusätzlich mit zwei O-Ringen vom Formkörper 5 beabstandet.

Innerhalb des Formteils 20 sind die Temperierkanäle 54 ausgebildet. Dazu ist im Formteil 20 eine Bohrung 541 vorgesehen in die ein Rohr 542 mündet bzw. diese Bohrung 541 ihrer Länge nach durchdringt, sodass zwischen dem Rohr 542 unter Innenwandung der Bohrung 541 ein ringförmiger Spalt entsteht durch welche das Temperiermedium in die Nähe des Bereichs 511 geführt werden kann, bzw. aus diesem abgeführt werden kann. Das Rohr 542 mündet in einen entsprechenden Kanal am Verteilerblock 521 und entsprechend mündet der ringförmige Spalt in einen weiteren Kanal am Verteilerblock 21. Diese Kanäle münden entsprechend in den Anschlüssen 211 und 212 (siehe Figur 2).

Der Kühlkanal 54 weist an seinem benachbart zum Bereich 511 liegenden Ende eine Erweiterung auf, sodass der Kühlkanal 54 eine Kammer bildet. Diese Kammer verbindet den Ringspalt und das Rohr, sodass ein Kühlkreislauf bereitgestellt werden kann. Die Kammer ist mit einer Wandstärke zum Formnest 6 beabstandet die im vorliegenden Fall 3 mm beträgt. Dies stellt sicher, dass die Wärme die diese Wandstärke beispielsweise nach dem Blasformen aufweist, schnell abgeführt werden kann, bzw., dass die Wandstärke mit einem geeigneten Heizmedium schnell aufgewärmt werden kann, sodass ihre Temperatur im Wesentlichen jener des Vorformlings entspricht, der in das Formnest 6 zum Blasformen eingeführt wird.

Die Figur 4 zeigt eine zur Figur 2 alternative Blasformhälfte 2 eines Blasformwerkzeuges 1 zur Ausführung des erfindungsgemässen Verfahrens.

Die Blasformhälfte 2 umfasst wiederum eine Grundplatte 4 und einen Formkörper 5, in dem ein Formnest 6 ausgebildet ist. Das eine Hälfte der Form eines Behälterkörpers festlegende Formnest 6 ist von einer formgebenden Innenwandung 51 begrenzt. Die Innenwandung 51 ist vollständig als Bereich 511 ausgebildet und mit einem hier nicht dargestellten Reflexionsgitter versehen. Zum Unterschied von der in Figur 2 dargestellten Blasformhälfte ist der Formkörper 5 in einen Isolationsblock 16 eingebettet. Der Isolationsblock 16 besteht aus einem thermisch isolierenden Kunststoff oder Kunststoffverbundmaterial und isoliert den Formkörper 5 thermisch gegenüber der Grundplatte 4, einem daran befestigten Rahmen 17, einem Halseinsatz 18, welcher der Kopfplatte 7 in Figur 1 entspricht, sowie dem Bodenteil 10. Der Isolationsblock 16 verhindert Wärmebrücken zwischen dem Formkörper 5 und den diesen umgebenden Bestandteilen des Blasformwerkzeugs. Der Halseinsatz 18 ist gemäss dem dargestellten Ausführungsbeispiel als ein separates Teil ausgebildet, das beim Schliessen der Blasformhälften zugestellt und beim Öffnen derselben wieder abgehoben wird. Der Halseinsatz 18 kann jedoch auch fest mit dem Rahmen 17 verbunden sein.

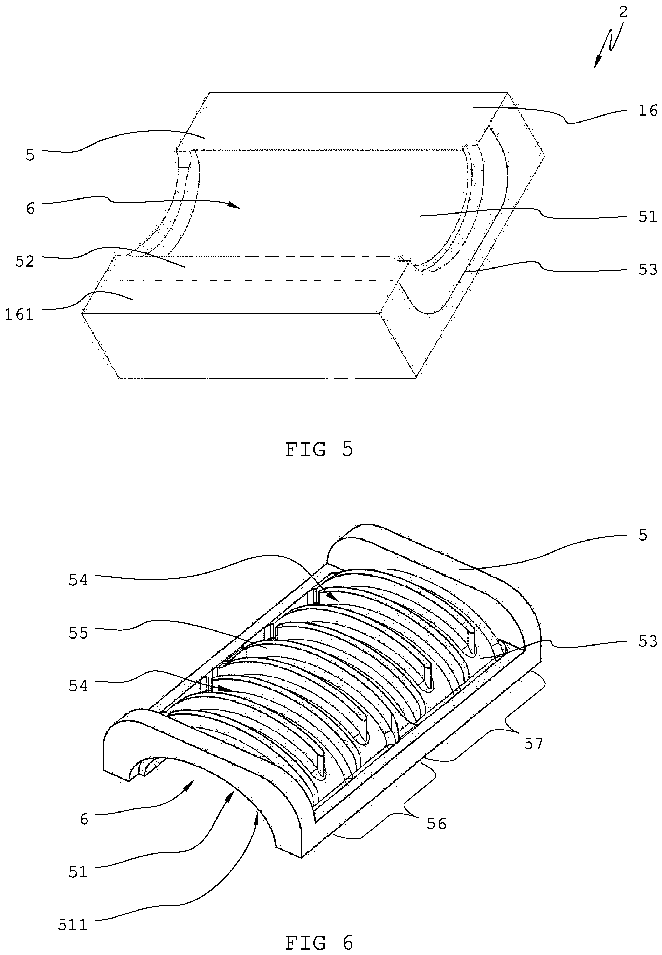

Die Figur 5 zeigt den Formkörpers 5 gemäss der Figur 4. Dieser ist in einen Isolationsblock 16 eingebettet. Das Formnest trägt wiederum das Bezugszeichen 6. Die das Formnest 6 begrenzende Innenwandung ist mit dem Bezugszeichen 51 versehen. Das Formnest 6 definiert beispielsweise die Hälfte der Form eines Behälterkörpers. Die Innenwandung 51 kann beispielsweise poliert ausgebildet sein, weist vorliegend aber ein Reflexionsgitter auf, das der besseren Übersichtlichkeit halber nicht dargestellt ist. Der Formkörper 5 ist vollständig in den Isolationsblock 16 eingebettet, um sicherzustellen, dass keine unerwünschten Wärmebrücken zur Grundplatte 4 auftreten können. Der Formkörper 5 ist beispielsweise derart bemessen, dass im Isolationsblock 16 Platz für eine Kopfplatte bzw. für ein Fussteil für die Erstellung des Behälterhalses bzw. des Behälterbodens verbleibt. Auf diese Weise sind auch die Kopfplatte bzw. das Fussteil (jeweils nicht dargestellt) gegenüber der Grundplatte und dem Rahmen der Blasformhälfte thermisch isoliert und können allfällige Wärmebrücken verhindert werden.

Die formgebende Innenwandung 51 weist zu einer Rückseite 53 des Formkörpers 5 einen möglichst kleinen Abstand auf. Mit anderen Worten weist der Formkörper 5 im Bereich des Formnests 6 eine Wandstärke auf, die etwa 1,5 mm bis 12 mm beträgt. Dies stellt sicher, dass die Wärme die diese Wandstärke beispielsweise nach dem Blasformen aufweist, schnell abgeführt werden kann, bzw., dass die Wandstärke mit einem geeigneten Heizmedium schnell aufgewärmt werden kann, sodass ihre Temperatur im Wesentlichen jener des Vorformlings entspricht, der in das Formnest 6 zum Blasformen eingeführt wird.

Die Figur 6 zeigt eine perspektivische Ansicht der Rückseite 53 des Formkörpers 5 aus der Figur 3. In der vom Betrachter abgewandten Seite des Formkörpers 5 ist das Formnest 6 ausgebildet. Die Rückseite 53 des Formkörpers 5 ist mit Temperierkanälen 54 für den Durchfluss eines Heiz-/Kühlmediums, beispielsweise Wasser, versehen. Die Temperierkanäle 54 können durch materialabtragende Bearbeitung, beispielsweise Fräsen und Bohren, des Formkörpers 5 erstellt sein. Sie sind voneinander durch Rippen abgegrenzt. In einer alternativen Ausführungsvariante können die Temperierkanäle 54 beim Giessen des Formkörpers oder durch alternative Fertigungsverfahren, beispielsweise Laserschmelzen oder Metalldruck, hergestellt sein. Die Rückseite 53 des Formkörpers 5 mit den Temperierkanälen 54 ist im zusammengebauten Zustand des Blasformwerkzeugs in den Isolationsblock eingebettet (Figur 3). Der Isolationsblock dient nicht nur zur thermischen Isolation des Formkörpers 5 gegenüber den übrigen Bestandteilen der Blasformhälfte. Vielmehr ist der Isolationsblock ebenfalls mit Kanälen und/oder Bohrungen für die Zu- und Abfuhr des Heiz-/Kühlmediums zu den an der Rückseite des Formkörpers ausgebildeten Kanälen ausgestattet. Es kann vorgesehen sein, dass alle Anschlüsse für die Zu- und Abfuhr von heissen und kalten Medien am Isolationsblock vorgesehen sind. Die Anschlüsse haben dann keinen thermischen Kontakt beispielsweise mit der Grundplatte oder anderen Bestandteilen des Blasformwerkzeugs.

Je nach Grösse des Formnests 6 im Formkörper 5 können an der Rückseite 52 des Formkörpers 5 auch zwei oder mehrere voneinander getrennte Heiz-/Kühlkreise vorgesehen sein. Im dargestellten Ausführungsbeispiel trennt eine Trennwand 55 die Temperierkanäle 54 in zwei Heiz-/Kühlkreise 56, 57. Die einzelnen Heiz-/Kühlkreise sind als eine mäanderförmige Anordnung aus Kanälen gebildet. Das Vorsehen mehrerer Heiz-/Kühlkreise 56, 57 erlaubt ein schnelleres Einbringen bzw. Verdrängen des Heiz-/Kühlmediums, um den Formkörper aufzuheizen bzw. wieder abzukühlen. Mit Vorteil beträgt dabei der Druck des Heiz-/Kühlmediums bis zu 15 bar. In Verbindung mit mehreren Heiz-/Kühlkreisen 56, 57 ist dadurch eine sehr schnelles Aufheizen bzw. Abkühlen des Formkörpers 5 ermöglicht, was sich vorteilhaft auf die Zykluszeiten auswirkt. Als Heiz-/Kühlmedium für den Formkörper 5 wird üblicherweise Wasser eingesetzt. Das Heiz-/Kühlmedium strömt dabei in möglichst grosser Nähe zur das Formnest 6 begrenzenden formgebenden Innenwandung 51 die hier den Bereich 511 bereitstellt. Die Rückseite 53 des Formkörpers 5 stellt gemeinsam mit den Temperierkanälen 54 also den dem Bereich zugehörigen Abschnitt dar. Durch die Anordnung der Temperierkanäle 54 kann insbesondere beim Abkühlen des Formkörpers 5 die Wärme der an die formgebende Innenwandung 51 anliegenden Behälterwandung sehr gut abgeführt werden. Das Abführen der Wärme wird durch die die Kanäle bildenden Rippen zusätzlich verbessert. Anders als beispielsweise beim Spritzgiessen kann beim Blasformen die Wärme nur einseitig über die gekühlte formgebende Innenwandung des Formkörpers abgeführt werden.

Bei dem Verfahren zur Übertragung einer Negativstruktur, vorliegend eines Reflexionsgitters, einer Oberfläche einer Innenwandung eines Blasformwerkzeuges , welches übergreifend über alle Figuren beschrieben ist, wird zuerst der Bereich 511 des Formnests 6 des Formkörpers 5 einer ersten Blasformhälfte 2 des Blasformwerkzeuges 1 durch Zuführung eines Temperiermediums durch separate Temperierkanäle 54 bis in den Bereich der Temperatur des Vorformlings aufgeheizt. Anschliessend wird der Vorformling in das Formnest 6 eingebracht. Nachfolgend wir das Blasformwerkzeug 1 geschlossen und der Kunststoffbehälters durch Aufblasen des Vorformlings und durch Anlegen des Vorformlings an die Innenwandung 51 des Formnestes 6 geformt. Nach dem Formen wird der Bereich durch Zuführung eines Kühlmediums durch die Temperierkanäle 54 mit einer Geschwindigkeit von 5K/s gekühlt und beim Erreichen einer bestimmten Kühltemperatur der Kunststoffbehälter entformt. Durch die hohe Temperatur des Bereiches und das schnelle Abkühlen des Bereichs nach dem Aufblasen des Kunststoffbehälters kann das Reflexionsgitter nahezu unverändert auf den Kunststoffbehälter übertragen werden.

## Patentansprüche

1. Verfahren zum Übertragen einer Negativstruktur einer Oberfläche einer Innenwandung 51 eines Blasformwerkzeuges (1), insbesondere eines Extrusionsblasformwerkzeuges, auf eine Oberfläche eines Kunststoffbehälters umfassend die Schritte
- Aufheizen zumindest eines Bereichs (511) eines Formnests (6) eines Formkörpers (4) des Blasformwerkzeuges (1) an welchem die Negativstruktur ausgebildet ist,
- Einbringen eines Vorformlings in das Formnest (6),
- Schliessen des Blasformwerkzeugs (1)
- Formen des Kunststoffbehälters durch Aufblasen des Vorformlings und durch Anlegen des Vorformlings an die Innenwandung (51) des Formnestes (6)
- Abkühlen des Bereichs (511) durch Zuführung eines Kühlmediums durch Temperierkanäle (54)
- Entformen des Kunststoffbehälters.

2. Verfahren nach Anspruch 1,
**dadurch gekennzeichnet, dass**
der Bereich (511) das vollständige Formnest (6) umfasst.

3. Verfahren nach Anspruch 1 oder 2,
**dadurch gekennzeichnet, dass**
der Bereich (511) beim Formen von Kunststoffbehältern die im Wesentlichen aus Polyolefinen bestehen auf mindestens 100° C, vorzugsweise auf mindestens 130°, insbesondere auf mindestens 150°, vorzugsweise auf 170° C aufgeheizt wird.

4. Verfahren nach einem der Ansprüche 1 bis 3,
**dadurch gekennzeichnet, dass**
der Bereich (511) beim Abkühlen mit einer mittleren Abkühlgeschwindigkeit von mindestens 5K/s, vorzugsweise 15 K/s, insbesondere 30K/s gekühlt wird, bis zu einer Entformtemperatur von 60° C bei Kunststoffbehältern die im Wesentlichen aus Polyolefinen bestehen.

5. Verfahren nach einem der Ansprüche 1 bis 4,
**dadurch gekennzeichnet, dass**
der Vorformling im Wesentlichen aus einem Polyolefin besteht, und dass das Heizmedium mit einer Temperatur von 120° C bis 200° C, vorzugsweise 160° C, und das Kühlmedium mit einer Temperatur von 5° C bis 40° C, vorzugsweise 15° C, zugeführt wird.

6. Verfahren nach einem der Ansprüche 1 bis 5,
**dadurch gekennzeichnet, dass**
der Bereich (511) gegenüber dem Formkörper (5) und/oder gegenüber einer Grundplatte (4) thermisch isoliert ist.

7. Verfahren nach einem der Ansprüche 1 bis 6,
**dadurch gekennzeichnet, dass**
der Bereich (511) in einem zugehörigen Abschnitt des Formkörpers (5) separate Temperierkanäle (54) zum Temperieren des Bereichs (511) aufweist.

8. Verfahren nach einem der Ansprüche 1 bis 7 sowie Anspruch 2,
**dadurch gekennzeichnet, dass**
zwischen dem Formkörper (4) und der Grundplatte (5) der Blasformhälfte (2) ein Isolationselement (16) aus einem thermisch isolierenden Material angeordnet ist

9. Verfahren nach einem der Ansprüche 1 bis 8,
**dadurch gekennzeichnet, dass**
eine Wandstärke zwischen dem Temperierkanal (54) und dem Bereich (511) mindestens 1.5 mm und höchstens 12 mm beträgt.

10. Verfahren nach einem der Ansprüche 1 bis 9,
**dadurch gekennzeichnet, dass**
der Bereich (511) als Negativstruktur eine gleichmässig strukturierte Oberfläche aufweist.

11. Verfahren nach Anspruch 10,
**dadurch gekennzeichnet, dass**
die strukturierte Oberfläche als ein Reflexionsgitter ausgebildet ist, mit einer Gitterkonstanten von weniger als 10 um, wobei diese strukturierte Oberfläche durch die Verfahrensschritte mit einer Abweichung von weniger als 1 um, insbesondere von weniger als 0.5 um, vorzugsweise von weniger als 0.1 um auf die Oberfläche des Kunststoffbehälters übertragen wird.

12. Kunststoffbehälter aus einem Polyolefin, insbesondere aus Polypropylen, hergestellt nach einem Verfahren nach einem der Ansprüche 1 bis 11, wobei der Behälter eine Oberfläche aufweist, die zumindest in einem Bereich strukturiert ist, wobei die Struktur der Oberfläche weniger als 1 um, insbesondere weniger als 0.5 um, vorzugsweise weniger als 0.1 um, bevorzugt weniger als 0.01 um von der Negativstruktur der dem Behälter entsprechenden Blasform abweicht.

13. Kunststoffbehälter nach Anspruch 12, **dadurch gekennzeichnet, dass** die strukturierte Oberfläche als ein Reflexionsgitter ausgebildet ist, wobei die Gitterkonstante vorzugsweise weniger als 10 um, bevorzugt weniger als 5 um insbesondere weniger als 1 um ist.

## Claims

1. Method for transferring a negative structure of a surface of an inner wall 51 of a blow molding tool (1), in particular of an extrusion blow-molding tool, to a surface of a plastic container, comprising the steps of
- heating at least one region (511) of a mold cavity (6) of a molding body (4) of the blow molding tool (1) on which the negative structure is formed,
- introducing a preform into the mold cavity (6),
- closing the blow molding tool (1),
- shaping the plastic container by inflating the preform and abutting the preform against the inner wall (51) of the mold cavity (6),
- cooling the region (511) by feeding a coolant through temperature control channels (54),
- demolding the plastic container.

2. Method according to Claim 1,
**characterized in that** the region (511) comprises the entire mold cavity (6).

3. Method according to Claims 1 or 2, **characterized in that** during the shaping of plastic containers consisting substantially of polyolefins, the region (511) is heated to at least 100°C, preferably to at least 130°C, in particular to at least 150°C, preferably to 170°C.

4. Method according to any one of Claims 1 to 3, **characterized in that** during cooling, the region (511) is cooled at an average cooling rate of at least 5 K/s, preferably 15 K/s, in particular 30 K/s, up to a demolding temperature of 60°C in the case of plastic containers consisting substantially of polyolefins.

5. Method according to any one of Claims 1 to 4, **characterized in that** the preform consists substantially of a polyolefin and **in that** the heating medium is supplied at a temperature of 120°C to 200°C, preferably 160°C, and the cooling medium is supplied at a temperature of 5°C to 40°C, preferably 15°C.

6. Method according to any one of Claims 1 to 5, **characterized in that** the region (511) is thermally insulated from the molding body (5) and/or from a baseplate (4).

7. Method according to any one of Claims 1 to 6, **characterized in that** the region (511) has, in an associated section of the molding body (5), separate temperature control channels (54) for controlling the temperature of the region (511).

8. Method according to any one of Claims 1 to 7 and also Claim 2, **characterized in that** an insulating element (16) made of a thermally insulating material is arranged between the molding body (4) and the baseplate (5) of the blow mold half (2).

9. Method according to any one of Claims 1 to 8, **characterized in that** a wall thickness between the temperature control channel (54) and the region (511) is at least 1.5 mm and at most 12 mm.

10. Method according to any one of Claims 1 to 9, **characterized in that** the region (511) has a uniformly structured surface as the negative structure.

11. Method according to Claim 10, **characterized in that** the structured surface is designed as a reflection grating, having a grating constant of less than 10 µm, wherein this structured surface is transferred to the surface of the plastic container by the method steps with a deviation of less than 1 µm, in particular of less than 0.5 µm, preferably of less than 0.1 µm.

12. Plastic container made of a polyolefin, in particular polypropylene, produced according to a method according to any one of Claims 1 to 11, wherein the container has a surface that is structured at least in one region, wherein the structure of the surface deviates less than 1 µm, in particular less than 0.5 µm, preferably less than 0.1 µm, preferably less than 0.01 µm, from the negative structure of the blow mold corresponding to the container.

13. Plastic container according to Claim 12, **characterized in that** the structured surface is designed as a reflection grating, wherein the grating constant is preferably less than 10 µm, preferably less than 5 µm, in particular less than 1 µm.

## Revendications

1. Procédé de transfert d'une structure négative d'une surface d'une paroi intérieure (51) d'un moule de soufflage (1), en particulier d'un moule d'extrusion-soufflage, sur une surface d'un récipient en plastique, comprenant les étapes suivantes :
- chauffage d'au moins une région (511) d'une cavité (6) d'un corps de moule (4) du moule de soufflage (1), sur laquelle est réalisée la structure négative,
- introduction d'une préforme dans la cavité de moule (6),
- fermeture du moule de soufflage (1),
- mise en forme du récipient en plastique par soufflage de la préforme et par application de la préforme contre la paroi intérieure (51) de la cavité de moule (6),
- refroidissement de la région (511) par apport d'un fluide de refroidissement dans des canaux de régulation de température (54),
- démoulage du récipient en plastique.

2. Procédé selon la revendication 1, **caractérisé en ce que** la région (511) comprend la totalité de la cavité de moule (6).

3. Procédé selon la revendication 1 ou 2, **caractérisé en ce que** lors de la mise en forme de récipients en plastique constitués essentiellement de polyoléfines, la région (511) est chauffée à au moins 100 °C, de préférence à au moins 130 °C, en particulier à au moins 150 °C, de préférence à 170 °C.

4. Procédé selon l'une des revendications 1 à 3, **caractérisé en ce que** lors du refroidissement, la région (511) est refroidie à une vitesse de refroidissement moyenne d'au moins 5 K/s, de préférence 15 K/s, notamment 30 K/s, jusqu'à une température de démoulage de 60 °C, pour des récipients en plastique qui sont constitués essentiellement de polyoléfines.

5. Procédé selon l'une des revendications 1 à 4, **caractérisé en ce que** la préforme est constituée essentiellement d'une polyoléfine, et **en ce que** le fluide de chauffage est apporté avec une température allant de 120 °C à 200 °C, de préférence 160 °C, et le fluide de refroidissement est apporté avec une température allant de 5 °C à 40 °C, de préférence 15 °C.

6. Procédé selon l'une des revendications 1 à 5, **caractérisé en ce que** la région (511) est isolée thermiquement vis-à-vis du corps de moule (5) et/ou vis-à-vis d'une plaque de base (4).

7. Procédé selon l'une des revendications 1 à 6, **caractérisé en ce que** dans une partie associée du corps de moule (5), la région (511) présente des canaux de régulation de température (54) distincts, destinés à la régulation de la température de la région (511).

8. Procédé selon l'une des revendications 1 à 7 et la revendication 2, **caractérisé en ce que** un élément isolant (16), constitué d'un matériau thermiquement isolant, est disposé entre le corps de moule (4) et la plaque de base (5) du demi-moule de soufflage (2).

9. Procédé selon l'une des revendications 1 à 8, **caractérisé en ce que** une épaisseur de paroi entre le canal de régulation de température (54) et la région (511) est d'au moins 1,5 mm et d'au maximum 12 mm.

10. Procédé selon l'une des revendications 1 à 9, **caractérisé en ce que** la région (511) présente une surface à structure uniforme en tant que structure négative.

11. Procédé selon la revendication 10, **caractérisé en ce que** la surface structurée est réalisée comme réseau de réflexion présentant une constante de réseau inférieure à 10 µm, ladite surface structurée étant transférée sur la surface du récipient en plastique par les étapes du procédé, avec un écart de moins de 1 µm, notamment de moins de 0,5 µm, de préférence de moins de 0,1 pm.

12. Récipient en plastique constitué d'une polyoléfine, en particulier d'un polypropylène, fabriqué par un procédé selon l'une des revendications 1 à 11, le récipient ayant une surface qui est structurée au moins dans une région, la structure de la surface s'écartant de la structure négative du moule de soufflage correspondant au récipient de moins de 1 µm, notamment de moins de 0,5 µm, de préférence moins de 0,1 µm, de préférence moins de 0,01 pm.

13. Récipient en plastique selon la revendication 12, **caractérisé en ce que** la surface structurée est réalisée comme réseau de réflexion, la constante de réseau étant de préférence inférieure à 10 µm, de préférence inférieure à 5 µm, notamment inférieure à 1 pm.
